# FASCICULE DE BREVET EUROPEEN

(11) **EP 2 471 690 B1**
(45) Date de publication et mention de la délivrance du brevet: **19.03.2014**
(21) Numéro de dépôt: 12150034.2
(22) Date de dépôt: 03.01.2012
(51) Int. Cl.: B60R 11/02

(54) **Système de fixation d'une télécommande de boîtier électronique dans un véhicule automobile**
Befestigungssystem einer Fernbedienung eines elektronischen Gehäuses in einem Kraftfahrzeug
System for attaching an electronic unit remote control in an automobile

(30) Priorité: 04.01.2011 FR 1150054
(43) Date de publication de la demande: 04.07.2012
(73) Titulaire: Parrot, 75010 Paris (FR)
(72) Inventeur: Vuillet, Jean-Francois, 78000 VERSAILLES (FR)
(74) Mandataire: Dupuis-Latour, Dominique

(56) Documents cités:
- EP-A1- 1 502 835
- DE-A1- 19 539 396
- DE-U1- 29 910 846
- GB-A- 2 424 854
- US-B1- 6 760 569

## Description

L'invention concerne un système de fixation d'une télécommande de boîtier électronique dans un véhicule automobile.

L'invention trouve une application particulièrement avantageuse dans le domaine des boîtiers électroniques audio destinés en particulier à réaliser les fonctions de téléphonie "mains libres" et d'écoute de programmes musicaux dans les véhicules automobiles.

Des boîtiers de ce type sont généralement fournis en deuxième monte sur les véhicules automobiles pour permettre à l'utilisateur, le plus souvent le conducteur du véhicule, de téléphoner sans avoir à manipuler le combiné téléphonique et également d'écouter des programmes de musique. D'autres fonctions telles qu'un système GPS de géolocalisation par satellite peuvent être intégrées à ces boîtiers.

De nombreuses commandes sont mises à la disposition de l'utilisateur pour obtenir un usage optimal des fonctions de base du boîtier que sont la téléphonie et l'écoute de programmes musicaux. Parmi ces commandes, on peut citer : le décrochage et le raccrochage d'un appel téléphonique ; le recours à la fonction "reconnaissance vocale" ; l'augmentation et la diminution du volume ; le passage au morceau suivant ou précédent, etc. Le boîtier électronique proprement dit est en général placé sur la planche de bord, à un endroit qui se révèle souvent trop éloigné du conducteur pour qu'il puisse l'atteindre aisément sans gêner la conduite. C'est pour cette raison que le boîtier électronique est complété par une télécommande rapprochée, destinée à faciliter l'accès aux commandes des fonctions de base mentionnées plus haut.

La télécommande peut être disposée sur la face avant de la planche de bord, voire sur le volant lui-même pour une accessibilité immédiate des commandes, tout en garantissant la sécurité de la conduite puisque dans ce cas le conducteur n'a pas besoin de lâcher le volant.

On connaît de telles télécommandes qui peuvent être fixées sur le volant ou bien sur la planche de bord du véhicule. Pour fixer la télécommande sur le volant, il faut d'abord installer un support intermédiaire sur le volant, puis clipper la télécommande proprement dite sur le support. Un autre support intermédiaire adhésif doit être utilisé pour fixer la télécommande sur la planche de bord.

GB 2 424 864 A divulgue un système de fixation d'une télécommande de boîtier électronique dans un véhicule automobile, comprenant
- une télécommande (1) comportant:
   un patin cylindrique (2) de contact avec le volant du véhicule, ménagé sur la télécommande;
   un premier insert formé par les pointes (14) s'étendant parallèlement aux génératrices du patin cylindrique à une première extrémité du patin ; et
   un second insert (autres points 14) s'étendant parallèlement aux génératrices du patin cylindrique à une seconde extrémité du patin, opposée à la première extrémité,
- une sangle amovible (3) destinée à fixer le patin cylindrique de contact sur le volant, comprenant:
   un moyen (13a) d'accrochage au second insert, et
   une face auto-agrippante (13b) apte à être rabattue sur elle-même autour du premier insert ;

Ces systèmes de fixation connus présentent l'inconvénient d'exiger un support intermédiaire pour fixer la télécommande sur le volant. Cela conduit à un ensemble support + télécommande volumineux, susceptible de gêner le conducteur dans le maniement du volant. D'autre part, le montage de la télécommande sur le volant n'est pas très aisé, car il nécessite la mise en place d'une pièce supplémentaire constituée par le support intermédiaire.

L'un des buts de l'invention est de proposer un système très compact de fixation d'une télécommande de boîtier électronique dans un véhicule automobile de manière, tout à la fois, à minimiser l'encombrement sur le volant, limiter la gêne à la conduite, augmenter le confort de conduite et garantir la sécurité.

D'autre part, le système de fixation proposé doit en outre être polyvalent (montage indifféremment sur le volant ou sur la planche de bord) et facilement démontable, avec un minimum de pièces à manipuler afin de pouvoir rapidement déplacer la télécommande du volant à la planche de bord et inversement.

Ce but est atteint, conformément à l'invention, du fait que le système comprend :
- un patin cylindrique de contact avec le volant du véhicule, ménagé sur la télécommande ;
- un premier insert s'étendant parallèlement aux génératrices du patin cylindrique à une première extrémité du patin ;
- un second insert s'étendant parallèlement aux génératrices du patin cylindrique à une seconde extrémité du patin, opposée à la première extrémité ;
- une sangle amovible destinée à fixer le patin cylindrique de contact sur le volant, la sangle comprenant un moyen d'accrochage au second insert et une face auto-agrippante apte à être rabattue sur elle-même autour du premier insert ; et
- une platine intermédiaire amovible comprenant des moyens de fixation à la planche de bord du véhicule, des moyens de maintien sur le premier insert et des moyens de verrouillage sur le second insert.

Ainsi, comme on le verra en détail plus loin, la fixation de la télécommande sur le volant est très simple grâce à la sangle auto-agrippante amovible qui se place autour du volant à la manière d'une courroie, la sangle pouvant de plus être rapidement montée sur la télécommande et démontée. De même, la télécommande peut être mise en place sur la platine intermédiaire très facilement, par simple clippage, la platine elle-même étant rapportée sur la planche de bord par tous moyens de fixation, notamment adhésifs.

On comprend que le patin cylindrique ménagé sur la télécommande a une forme permettant d'offrir la plus grande surface de contact avec le volant pour une meilleure tenue de la télécommande. En ce sens, l'invention prévoit que le patin de contact est en élastomère, en caoutchouc par exemple. On obtient ainsi une adhérence au volant augmentée et une bonne absorption des vibrations. De même, il est possible d'améliorer encore l'adhérence de la télécommande sur le volant du fait que, selon l'invention, le patin de contact porte des stries.

Même lorsque la télécommande est montée sur la platine intermédiaire pour être installée sur la planche de bord, il est possible de réduire l'effet des vibrations si, comme le propose l'invention, la platine intermédiaire comporte au moins un appui anti-vibration destiné à venir en butée contre le patin de contact.

Conformément à une forme de réalisation particulière de l'invention, au moins un insert est métallique. Cette caractéristique présente l'avantage, contrairement aux matériaux en plastique par exemple, d'obtenir une structure rigide tout en conservant une faible épaisseur, d'où un moindre encombrement et une intégration discrète de la télécommande dans l'environnement de l'habitacle du véhicule.

Selon un mode de réalisation de l'invention, le second insert porte un détrompeur d'accrochage de la sangle amovible. Cette disposition a pour objet de s'assurer que la sangle est accrochée sur la télécommande dans la bonne position, c'est-à-dire celle qui permet de rabattre la sangle autour du premier insert de manière à ce que les deux faces de la sangle se trouvant alors placées en regard soient des faces auto-agrippantes.

Concernant l'introduction de la télécommande dans la platine intermédiaire en vue de sa fixation sur la planche de bord du véhicule, il est prévu par l'invention que les moyens de maintien de la platine amovible sont constitués par un bec destiné à recevoir le premier insert, tandis que les moyens de verrouillage de la platine amovible sont constitués par au moins une languette flexible de clippage par déformation élastique sur le second insert. L'introduction de la télécommande dans la platine s'effectue donc de manière très simple en introduisant d'abord le premier insert dans le bec de la platine, puis en forçant l'écartement des languettes flexibles par déformation élastique au passage du second insert de la télécommande, les languettes se refermant après le passage de l'insert. Pour retirer la télécommande de la platine intermédiaire, il suffit de forcer les languettes flexibles à s'ouvrir pour dégager le second insert de la platine puis le reste de la télécommande.

Enfin, la face de la sangle opposée à la face auto-agrippante comprend avantageusement un matériau apte à augmenter l'adhérence avec la surface du volant. Ceci permet, en combinaison avec le patin cylindrique, de limiter la force de serrage de la sangle sur le volant.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1a est une vue en perspective, de dessous, d'une télécommande selon l'invention.
La Figure 1b est une vue en coupe transversale de la télécommande de la Figure 1 a.
La Figure 2 est une vue en perspective d'une sangle amovible destinée à équiper la télécommande des Figures 1 a et 1 b.
La Figure 3 est une vue en perspective de la télécommande des Figures 1 a et 1 b, équipée de la sangle de la Figure 2.
La Figure 4 est un détail, vu de côté, d'un détrompeur d'accrochage de la sangle de la Figure 2 sur la télécommande des Figures 1 a et 1 b.
La Figure 5 est une vue en coupe transversale de la télécommande des Figures 1 a et 1b, fixée sur un volant de véhicule automobile par l'intermédiaire de la sangle de la Figure 2.
La Figure 6 est une vue en perspective d'une platine intermédiaire pour la fixation de la télécommande des Figures 1 a et 1 b sur la planche de bord d'un véhicule automobile.
La Figure 7 est une vue, en perspective et en coupe transversale, de la télécommande des Figures 1 a et 1 b, montée sur la platine de la Figure 6.
La Figure 8 est une autre vue, en perspective, de la télécommande des Figures 1 a et 1 b, montée sur la platine de la Figure 6.

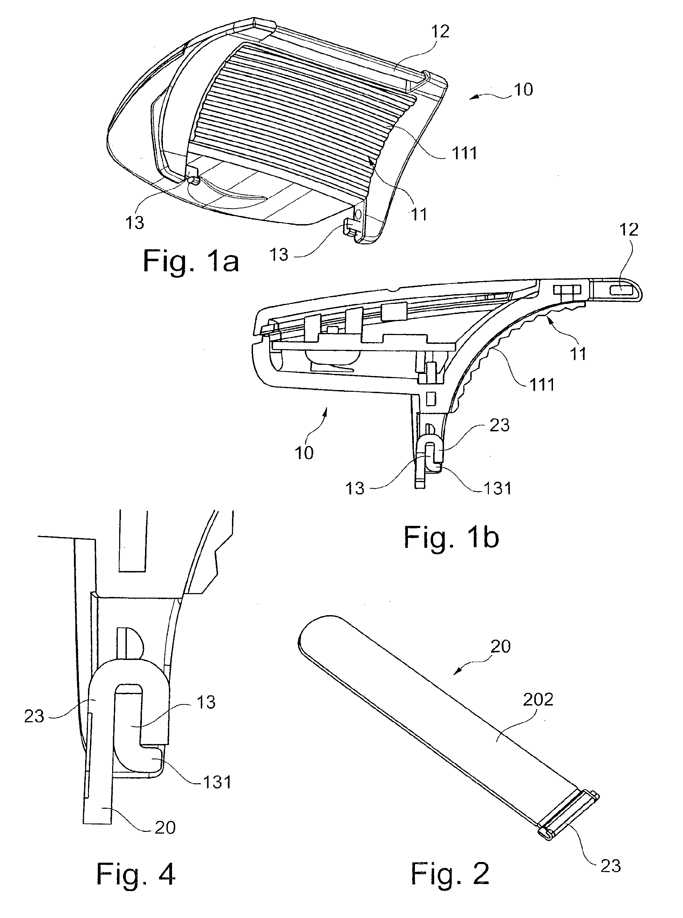

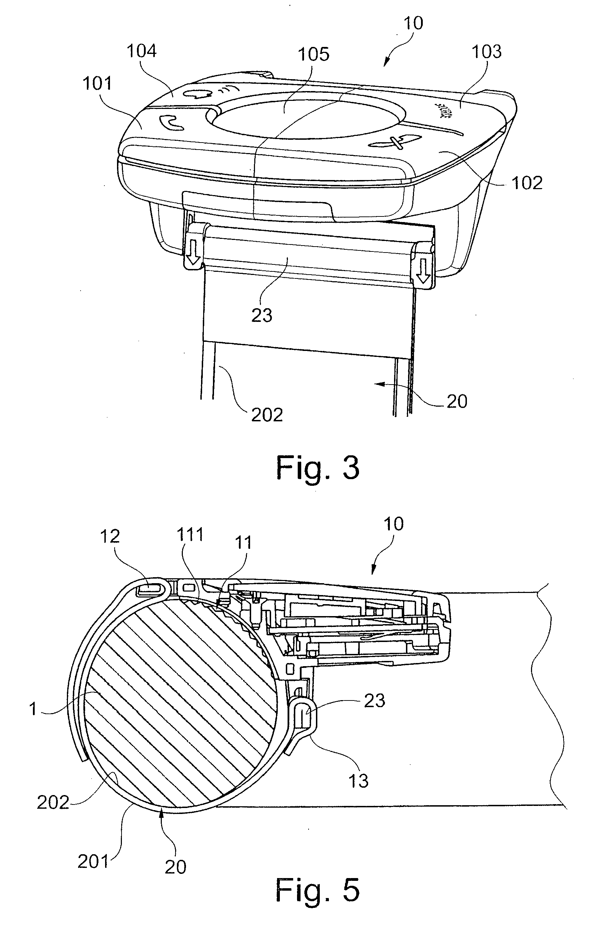

Sur les Figures 1 a et 1b est représentée une télécommande 10 destinée au pilotage d'un boîtier électronique "mains libres", non représenté, grâce auquel le conducteur d'un véhicule automobile peut émettre ou recevoir un appel téléphonique sans qu'il lui soit nécessaire de tenir en main un combiné téléphonique. Généralement, ce boîtier permet également de fournir d'autres applications d'intérêt pour l'utilisateur, à savoir l'écoute de morceaux de musique ou la géolocalisation GPS par exemple. A cet effet, et comme le montre la Figure 3, la télécommande 10 comprend des moyens propres à activer, notamment par liaison *Bluetooth* (marque déposée du Bluetooth SIG), la commande à distance de fonctions de base associées aux applications fournies par le boîtier électronique, en particulier la téléphonie et l'écoute de programmes musicaux.

Les moyens d'activation illustrés sur la Figure 3 sont des touches 101, 102, 103, 104, 105 permettant de commander diverses fonctions comme le décrochage ou le raccrochage d'un appel téléphonique, le recours à la reconnaissance vocale, le lancement ou l'arrêt de la lecture de musique, l'augmentation ou la diminution du volume, etc.

La télécommande 10 est prévue pour être fixée indifféremment sur le volant 1 ou bien sur la planche de bord du véhicule.

Afin d'obtenir un mode de fixation polyvalent, un patin cylindrique 11 de contact avec le volant 1 du véhicule est ménagé sur le corps de la télécommande 10, ainsi qu'on peut le voir sur les Figures 1 a et 1 b. La forme cylindrique du patin 11 est choisie de manière à envelopper au mieux la section du volant 1. L'adhérence entre le patin 11 et le volant 1 peut être augmentée grâce à l'utilisation d'un élastomère, du caoutchouc par exemple, pour réaliser le patin 11, avec l'avantage supplémentaire d'amortir les vibrations. De même, des stries 111 dessinées sur le patin 11 contribuent à améliorer encore l'adhérence du patin 11 sur le volant 1

Pour fixer positivement la télécommande 10 au volant 1 par l'intermédiaire du patin cylindrique 11, on utilise une sangle auto-agrippante 20 telle que celle représentée sur les Figures 2, 3, 4 et 5. D'une manière générale, la sangle 20 a un effet de courroie, apte à maintenir le patin 11 plaqué contre le volant 1 par enserrement de la télécommande 10 autour du volant, de sorte qu'une face auto-agrippante 201 de la sangle 20 soit rabattue sur elle-même autour d'un premier insert 12 ménagé à une première extrémité du patin cylindrique 11 parallèlement aux génératrices de ce dernier. La sangle 20 est maintenue par un moyen 23 d'accrochage sur un second insert 13 ménagé à une seconde extrémité du patin cylindrique 11, opposé à la première extrémité, parallèlement au premier insert 12. Dans l'exemple de réalisation montré aux Figures 2, 3, 4 et 5, le second insert est formé de deux crochets 13 d'extrémité, tandis que le moyen 23 d'accrochage est constitué d'un crochet longitudinal unique s'étendant sur toute la largeur de la sangle 20. Bien entendu, le second insert 13 pourrait également être un crochet unique s'étendant sensiblement sur toute la largeur du patin 11.

Les inserts 12, 13 sont de préférence métalliques pour procurer une meilleure rigidité sous une épaisseur minimum, par rapport à des inserts qui seraient réalisés en matériau plastique.

La face lisse 202 de la sangle 20 en contact direct avec la surface du volant 1 est formée d'un matériau qui permet d'augmenter l'adhérence avec la surface du volant, par exemple un revêtement de cuir synthétique. L'association du patin 11 de caoutchouc et de la sangle permet ainsi de limiter la force de serrage de la sangle, et de disposer d'une surface de contact adhérente sur la quasi-totalité de la zone en contact avec le volant. Comme il est de grande importance que la sangle 20 soit placée dans le sens permettant à la face auto-agrippante 201 de se replier sur elle-même, on prévoit sur le second insert un détrompeur réalisé par un bord arrondi 131 des crochets 13, comme le montre la vue de détail de la Figure 4.

Pour détacher la télécommande 10 du volant 1 afin de la placer par exemple sur la planche de bord du véhicule, il suffit simplement de désolidariser les deux brins en contact de la face auto-agrippante 201, de dégager la sangle 20 du premier insert 12 et de défaire le moyen d'accrochage 23 du second insert 13.

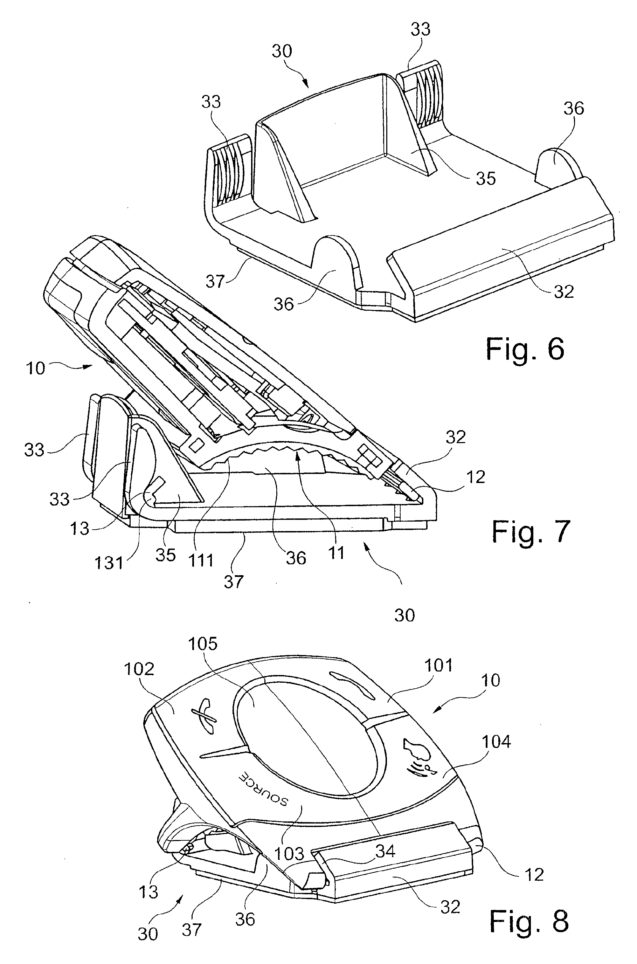

L'installation de la télécommande 10 sur la planche de bord utilise une platine intermédiaire amovible 30, représentée sur les Figures 6, 7 et 8. Cette platine 30 comprend, d'une part, des moyens pour recevoir la télécommande 10 et, d'autre part, des moyens de fixation à la planche de bord.

Les moyens pour recevoir la télécommande 10 comprennent un bec 32 de maintien du premier insert 12, et des moyens de verrouillage constitués par deux languettes flexibles 33 de clippage par déformation élastique sur le second insert 13. Pour monter la télécommande 10 dans la platine intermédiaire 30, il suffit d'engager le premier insert 12 dans le bec 32 de maintien et de déformer les languettes flexibles 33 au moyen du second insert 13 jusqu'à ce qu'elles se referment élastiquement après le passage de ce dernier. La partie arrondie 131 des crochets 13 servant de détrompeur permet un glissement doux du second insert sur les languettes 33.

Le retrait de la télécommande 10 de la platine 30 s'effectue de manière inverse en soulevant la télécommande afin de forcer l'ouverture des languettes flexibles par déformation élastique au moyen du second insert et permettre le dégagement de ce dernier.

Le bec 32 de la platine 30 est maintenu en position sur la télécommande 10 grâce à un décroché 34 d'encastrement ménagé sur la télécommande 10.

On peut voir sur la Figure 6 des nervures 35 de centrage de la platine 30 sur la télécommande 10. Ces nervures en venant s'appuyer respectivement contre les inserts 13 d'extrémité assurent un positionnement parfait de la platine 30.

Les Figures 6, 7 et 8 montrent la présence sur la platine 30 d'appuis anti-vibration 36 destinés à venir en butée contre le patin 11 en caoutchouc, lequel peut ainsi absorber les vibrations et améliorer les performances de l'ensemble.

Les moyens de fixation de la platine 30 sur le tableau de bord peuvent être des moyens adhésifs déposés sur la surface 37 de contact de la platine.

## Revendications

1. Système de fixation d'une télécommande de boîtier électronique dans un véhicule automobile, **caractérisé en ce qu'**il comprend :
- une télécommande (10) comportant :
• un patin cylindrique (11) de contact avec le volant (1) du véhicule, ménagé sur la télécommande ;
• un premier insert (12) s'étendant parallèlement aux génératrices du patin cylindrique à une première extrémité du patin ; et
• un second insert (13) s'étendant parallèlement aux génératrices du patin cylindrique à une seconde extrémité du patin, opposée à la première extrémité,
- une sangle amovible (20) destinée à fixer le patin cylindrique de contact sur le volant, comprenant :
• un moyen (23) d'accrochage au second insert, et
• une face auto-agrippante (201) apte à être rabattue sur elle-même autour du premier insert ; et
- une platine intermédiaire amovible (30), comprenant :
• des moyens de fixation à la planche de bord du véhicule,
• des moyens (32) de maintien sur le premier insert, et
• des moyens (33) de verrouillage sur le second insert.

2. Système de fixation selon la revendication 1, dans lequel le patin de contact est réalisé en élastomère.

3. Système de fixation selon la revendication 1, dans lequel le patin de contact porte des stries (111).

4. Système de fixation selon la revendication 1, dans lequel la platine intermédiaire comporte au moins un appui anti-vibration (36) destiné à venir en butée contre le patin de contact.

5. Système de fixation selon la revendication 1, dans lequel au moins l'un des inserts est métallique.

6. Système de fixation selon la revendication 1, dans lequel le second insert porte un détrompeur (131) d'accrochage de la sangle amovible.

7. Système de fixation selon la revendication 6, dans lequel le détrompeur est constitué par un bord arrondi du second insert.

8. Système de fixation selon la revendication 1, dans lequel le second insert est formé par deux crochets d'extrémité.

9. Système de fixation selon la revendication 8, dans lequel la platine amovible comporte deux nervures (35) de centrage destinées à venir respectivement en butée contre les crochets d'extrémité.

10. Système de fixation selon la revendication 1, dans lequel les moyens de maintien de la platine amovible sont constitués par un bec (32) destiné à recevoir le premier insert.

11. Système de fixation selon la revendication 10, dans lequel la télécommande présente un décroché (34) d'encastrement du bec de maintien.

12. Système de fixation selon la revendication 1, dans lequel les moyens de verrouillage de la platine amovible sont constitués par au moins une languette flexible (33) de clippage par déformation élastique sur le second insert.

13. Système de fixation selon la revendication 1, dans lequel les moyens de fixation de la platine amovible sont des moyens adhésifs.

14. Système de fixation selon la revendication 1, dans lequel la face (202) de la sangle opposée à la face auto-agrippante comprend un matériau apte à augmenter l'adhérence avec la surface du volant de manière, en combinaison avec le patin cylindrique (11), à limiter la force de serrage de la sangle sur le volant.

## Patentansprüche

1. System zur Befestigung einer Elektronikeinheit-Fernsteuerung in einem Kraftfahrzeug, **dadurch gekennzeichnet, dass** es enthält:
- eine Fernsteuerung (10), die aufweist:
. einen zylindrischen Kontaktschuh (11) mit dem Lenkrad (1) des Fahrzeugs, der auf der Fernsteuerung angeordnet ist;
. einen ersten Einsatz (12), der sich parallel zu den Mantellinien des zylindrischen Schuhs an einem ersten Ende des Schuhs erstreckt; und
. einen zweiten Einsatz (13), der sich parallel zu den Mantellinien des zylindrischen Schuhs an einem zweiten Ende des Schuhs entgegengesetzt zum ersten Ende erstreckt,
- einen abnehmbaren Spanngurt (20), der dazu bestimmt ist, den zylindrischen Kontaktschuh am Lenkrad zu befestigen, der enthält:
. eine Einrichtung (23) zum Festhaken am zweiten Einsatz, und
. eine selbsthaftende Seite (201), die um den ersten Einsatz herum auf sich selbst umgeschlagen werden kann; und
- eine abnehmbare Zwischenplatte (30), die enthält:
. Einrichtungen zur Befestigung am Armaturenbrett des Fahrzeugs,
. Einrichtungen (32) zum Halt am ersten Einsatz, und
. Einrichtungen (33) zur Verriegelung am zweiten Einsatz.

2. Befestigungssystem nach Anspruch 1, wobei der Kontaktschuh aus Elastomermaterial hergestellt ist.

3. Befestigungssystem nach Anspruch 1, wobei der Kontaktschuh Riefen (111) trägt.

4. Befestigungssystem nach Anspruch 1, wobei die Zwischenplatte mindestens eine Antivibrations-auflage (36) aufweist, die dazu bestimmt ist, gegen den Kontaktschuh in Auflage zu kommen.

5. Befestigungssystem nach Anspruch 1, wobei mindestens einer der Einsätze metallisch ist.

6. Befestigungssystem nach Anspruch 1, wobei der zweite Einsatz eine Verwechselungssicherung (131) für das Festhaken des abnehmbaren Spanngurts trägt.

7. Befestigungssystem nach Anspruch 6, wobei die Verwechselungssicherung aus einem abgerundeten Rand des zweiten Einsatzes besteht.

8. Befestigungssystem nach Anspruch 1, wobei der zweite Einsatz von zwei Endhaken geformt wird.

9. Befestigungssystem nach Anspruch 8, wobei die abnehmbare Platte zwei Zentrierrippen (35) aufweist, die dazu bestimmt sind, je gegen die Endhaken in Anschlag zu kommen.

10. Befestigungssystem nach Anspruch 1, wobei die Halteeinrichtungen der abnehmbaren Platte aus einer Nase (32) bestehen, die dazu bestimmt ist, den ersten Einsatz aufzunehmen.

11. Befestigungssystem nach Anspruch 10, wobei die Fernsteuerung eine Ausbuchtung (34) zur Einpassung der Haltenase enthält.

12. Befestigungssystem nach Anspruch 1, wobei die Verriegelungseinrichtungen der abnehmbaren Platte aus mindestens einer elastischen Zunge (33) zum Einschnappen durch elastische Verformung auf dem zweiten Einsatz besteht.

13. Befestigungssystem nach Anspruch 1, wobei die Befestigungseinrichtungen der abnehmbaren Platte Klebemittel sind.

14. Befestigungssystem nach Anspruch 1, wobei die Seite (202) des Spanngurts entgegengesetzt zur selbsthaftenden Seite ein Material enthält, das die Haftung an der Fläche des Lenkrads erhöhen kann, um in Kombination mit dem zylindrischen Schuh (11) die Klemmkraft des Spanngurts auf dem Lenkrad zu begrenzen.

## Claims

1. A system for the fixation of a remote control for an electronic unit in a motor vehicle, **characterized in that** it comprises:
- a remote-control (10) including:
. a cylindrical pad (11) for contact with the steering wheel (1) of the vehicle, arranged on the remote control;
. a first insert (12) extending parallel to the generating lines of the cylindrical pad, at a first end of the pad; and
. a second insert (13) extending parallel to the generating lines of the cylindrical pad, at a second end of the pad, opposite to the first end,
- a removable belt (20) intended to fix the cylindrical contact pad to the steering wheel, comprising:
. a means (23) for its fastening to the second insert, and
. a hook-and-loop face (201) adapted to be folded over itself around the first insert; and
- a removable intermediate plate (30), comprising:
. means for its fixation to the dashboard of the vehicle,
. means (32) for its holding on the first insert, and
. means (33) for its locking on the second insert.

2. The fixation system according to claim 1, wherein the contact pad is made of elastomer.

3. The fixation system according to claim 1, wherein the contact pad carries corrugations (111).

4. The fixation system according to claim 1, wherein the intermediate plate includes at least one anti-vibration bearing (36) intended to come into abutment against the contact pad.

5. The fixation system according to claim 1, wherein at least one of the inserts is metallic.

6. The fixation system according to claim 1, wherein the second insert carries a locator (131) for the fastening of the removable belt.

7. The fixation system according to claim 6, wherein the locator is consisted by an rounded edge of the second insert.

8. The fixation system according to claim 1, wherein the second insert is formed by two end hooks.

9. The fixation system according to claim 8, wherein the removable plate includes two centering ribs (35) intended to respectively come into abutment against the end hooks.

10. The fixation system according to claim 1, wherein the holding means of the removable plate are consisted by a nose (32) intended to receive the first insert.

11. The fixation system according to claim 1, wherein the remote control has an indentation (34) for the anchoring of the holding nose.

12. The fixation system according to claim 1, wherein the locking means of the removable plate are consisted by at least one flexible tab (33) for elastic deformation clipping on the second insert.

13. The fixation system according to claim 1, wherein the fixation means of the removable plate are adhesive means.

14. The fixation system according to claim 1, wherein the face (202) of the belt opposite the hook-and-loop face comprises a material adapted to increase the adhesion with the surface of the steering wheel so as to limit, in combination with the cylindrical pad (11), the clamping force of the belt on the steering wheel.
